# FASCICULE DE BREVET EUROPEEN

(11) **EP 3 300 988 B1**
(45) Date de publication et mention de la délivrance du brevet: **22.09.2021**
(21) Numéro de dépôt: 17193507.5
(22) Date de dépôt: 27.09.2017
(51) Int. Cl.: B61F 19/00, B61K 13/00, F16B 5/02

(54) **DISPOSITIF DE FIXATION RÉGLABLE EN HAUTEUR POUR VÉHICULE FERROVIAIRE**
HÖHENREGULIERBARE BEFESTIGUNGSVORRICHTUNG FÜR SCHIENENFAHRZEUG
HEIGHT-ADJUSTABLE FIXING DEVICE FOR RAILWAY VEHICLE

(30) Priorité: 28.09.2016 FR 1659172
(43) Date de publication de la demande: 04.04.2018
(73) Titulaire: ALSTOM Transport Technologies, 93400 Saint-Ouen (FR)
(72) Inventeur: MEYER, Kevin, 69003 Lyon (FR); THEVENOT, Maxime, 71390 Villeneuve en Montagne (FR)
(74) Mandataire: Lavoix

(56) Documents cités:
- EP-A1- 2 145 810
- FR-A1- 2 546 214

## Description

La présente invention concerne un dispositif de fixation utilisé pour fixer de manière amovible un équipement à un véhicule ferroviaire, par exemple à un longeron d'un bogie. L'équipement en question est par exemple, entre autres, une antenne, un détecteur d'obstacle, ou un chasse-pierres.

Ces équipements encombrants doivent être démontés lors d'opérations de maintenance des bogies, et remontés après les opérations. De plus, ces équipements doivent être positionnés à une hauteur précise par rapport aux rails, afin de fonctionner de manière optimale et de ne pas risquer de dégradations.

Les dispositifs usuels comprennent souvent des trous oblongs ou des plaques crantées, pour permettre le réglage en hauteur de l'équipement au cours de son assemblage. Cependant, ce type de dispositif nécessite de régler la hauteur de l'équipement avant sa fixation au véhicule.

Le réglage en hauteur de ces équipements, parfois lourds et encombrants, requiert la participation de plusieurs personnes et de matériel de levage, afin de positionner l'équipement à la hauteur désirée, avant de le fixer au véhicule avec des dispositifs de fixation usuels. Ces contraintes d'opération génèrent de longs temps d'immobilisation des équipements roulants, et des coûts associés importants.

Des exemples de dispositifs de fixation sont décrits dans les documents EP 2 145 810 A1 et FR2 546 214 A1.

Un but de l'invention est donc de fournir un dispositif de fixation pour un équipement de véhicule ferroviaire, permettant le maintien de l'équipement au cours du réglage en hauteur.

A cet effet, l'invention a pour objet un dispositif de fixation selon la revendication 1.

Un tel dispositif permet de régler la hauteur de l'équipement après la fixation de l'équipement au véhicule ferroviaire, tout en maintenant l'équipement en position pendant le réglage. De plus, ces dispositifs sont simples à fabriquer et robustes par rapport à des solutions plus complexes.

Selon des modes de réalisation particuliers, le dispositif de fixation selon l'invention comporte une ou plusieurs des caractéristiques des revendications 2 à 8, prises isolément ou selon toute combinaison techniquement possible.

L'invention concerne également un ensemble selon la revendication 9.

L'invention concerne également un procédé de réglage selon la revendication 10.

L'invention sera mieux comprise à la lecture de la description qui va suivre, donnée uniquement à titre d'exemple et faite en référence aux dessins annexés, parmi lesquels :
- la figure 1 est une vue en perspective d'un dispositif de fixation selon l'invention fixant un équipement à un bogie de véhicule ferroviaire ;

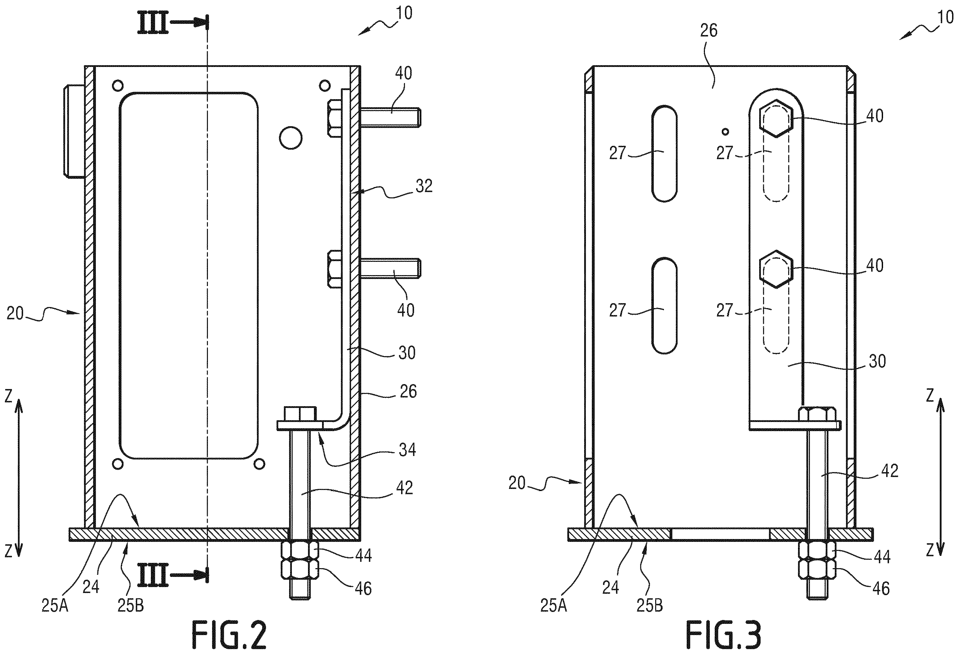

- la figure 2 est une vue en coupe du dispositif de fixation de la figure 1; et
- la figure 3 est une vue en coupe du dispositif de fixation des figures 1 et 2, dans une direction orthogonale à la coupe de la figure 2.

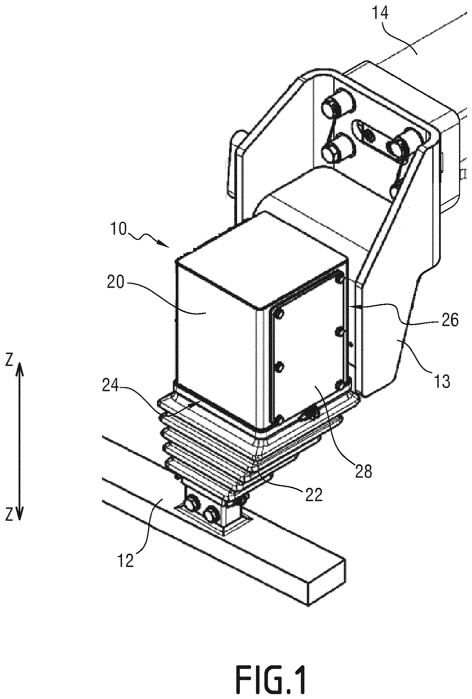

Un dispositif 10 de fixation est représenté sur la figure 1. Le dispositif 10 est adapté pour fixer un équipement 12 à un véhicule ferroviaire. Plus précisément, le dispositif 10 est adapté pour fixer l'équipement 12 à un support d'extrémité 13 d'un longeron 14, le longeron 14 faisant partie d'un bogie du véhicule ferroviaire. Le dispositif 10 permet en outre à un opérateur de faire varier la position de l'équipement 12 selon un axe vertical Z-Z.

L'équipement 12 est par exemple un détecteur d'obstacle, un lecteur de puces électromagnétiques, une antenne, ou un chasse-pierres. L'équipement 12 nécessite d'être positionné à une hauteur précise au-dessus de rails sur lesquels le véhicule ferroviaire est adapté pour circuler.

Le dispositif 10 comprend un carter 20, relié à l'équipement 12 par un levier 22.

Le carter 20 est une boite métallique, par exemple de forme parallélépipédique, définissant un espace intérieur et un espace extérieur. Le levier 22 est lié à une face inférieure 24 du carter 20. La face inférieure 24 définit une surface interne 25A et une surface externe 25B opposées selon l'axe vertical Z-Z.

Le carter 20 comporte également une face latérale 26 en contact avec le support d'extrémité 13. La face latérale 26 est parallèle à l'axe vertical Z-Z.

La face latérale 26 comporte une pluralité de trous oblongs 27 s'étendant selon la direction de l'axe Z-Z.

Avantageusement, le carter 20 comporte de plus au moins une face démontable 28 permettant à un opérateur d'accéder à l'espace intérieur du carter 20.

Le dispositif 10 comprend de plus une équerre 30 située dans l'espace intérieur du carter 20. L'équerre 30 comporte une surface latérale 32 et une surface inférieure 34 perpendiculaire à la surface latérale 32.

La surface latérale 32 est parallèle à l'axe vertical Z-Z, et en appui sur la face latérale 26 du carter 20.

La surface inférieure 34 est perpendiculaire à l'axe vertical Z-Z et s'étend en regard de la surface interne 25A de la face inférieure 24. Avantageusement, la surface inférieure 34 est parallèle à la face inférieure 24 du carter 20.

Le dispositif 10 comporte au moins un élément de fixation 40. Le ou chaque élément de fixation 40 passe par un orifice de la surface latérale 32 et par un des trous oblongs 27 de la face latérale 26. Dans l'exemple représenté, le dispositif 10 comprend deux éléments de fixation 40, qui sont des vis orientées perpendiculairement à la direction de l'axe vertical Z-Z.

Les éléments de fixation 40 sont aptes à être fixés au support d'extrémité 13, pour fixer le dispositif 10 au longeron 14. Lorsque les éléments de fixation 40 sont fixés au support d'extrémité 13, l'équerre 30 est fixe par rapport au support d'extrémité 13. Dans l'exemple représenté, les vis de fixation sont engagées dans des filetages du support d'extrémité 13.

Les éléments de fixation 40 sont aptes à bloquer la face latérale 26 du carter 20 en appui entre l'équerre 30 et le support d'extrémité 13 lorsque les éléments de fixation 40 sont serrés au support d'extrémité 13.

Lorsque les éléments de fixation 40 sont desserrés, la face latérale 26 est libre de coulisser entre l'équerre 30 et le support d'extrémité 13, les éléments de fixation 40 coulissant dans les trous oblongs 27.

Le dispositif 10 comporte de plus une tige de réglage 42, passant par un orifice de la surface inférieure 34 et par un orifice de la face inférieure 24 du carter 20. La tige de réglage est orientée selon la direction de l'axe vertical Z-Z

La tige de réglage est engagée dans un élément de serrage 44 s'étendant contre la surface extérieure 25B de la face inférieure 24.

L'élément de serrage 44 est en appui contre la face inférieure 24 du carter 20. Un déplacement de l'élément de serrage 44 le long de la tige de réglage 42 par l'opérateur permet de faire varier la position du carter 20 par rapport au support d'extrémité 13 le long de l'axe Z-Z.

Un élément de fixation complémentaire 46 est positionné sur la tige de réglage 42, au contact de l'élément de serrage 44, afin d'éviter des déplacements non voulus de l'élément de serrage 44. L'élément de fixation complémentaire 46 est retiré de la tige de réglage 42 par l'opérateur avant le réglage en hauteur de l'équipement 12, et remis en place après le réglage.

Dans l'exemple représenté, la tige de réglage 42 est une vis, et l'élément de serrage 44 et l'élément de fixation complémentaire 46 sont des écrous.

En variante, le dispositif 10 peut être utilisé pour fixer l'équipement 12 à d'autres parties du bogie, ou selon d'autres configurations, par exemple en travers du sens de déplacement. Le dispositif 10 peut également être utilisé pour fixer l'équipement 12 à d'autres parties du véhicule ferroviaire.

Un procédé de réglage en hauteur de l'équipement 12 fixé au longeron 14 du bogie de véhicule ferroviaire va maintenant être décrit.

Le procédé de réglage comprend les étapes suivantes :
- retrait de l'élément de fixation complémentaire 46 de la tige de réglage 42 ;
- desserrage du ou des éléments de fixation 40 afin de permettre le mouvement du carter 20 par rapport à l'équerre 30 ;
- maintien de l'équipement 12 en position verticale par le dispositif 10, l'équerre 30 restant fixée au support d'extrémité 13 par le ou les éléments de fixation 40 ;
- réglage de la hauteur de l'équipement 12 au moyen de l'élément de serrage 44 qui est déplacé, c'est-à-dire serré, le long de la tige de réglage 42 selon l'axe vertical Z-Z ;
- resserrage du ou des éléments de fixation 40 une fois l'équipement 12 positionné à la hauteur désirée ; et
- remise en place de l'élément de fixation complémentaire 46 en appui sur l'élément de serrage 44.

Le dispositif 10 permet à un unique opérateur d'effectuer les opérations de réglage en hauteur de l'équipement 12, encombrant, fixé au véhicule ferroviaire, sans nécessiter d'outils de levage. En effet, l'équerre 30 reste fixée au support d'extrémité 13 du longeron 14 au cours du réglage, et permet le maintien du dispositif 10 et de l'équipement 12 en position verticale tout au long de l'opération.

## Revendications

1. Dispositif (10) de fixation d'un équipement (12) à un véhicule ferroviaire, adapté pour permettre un réglage en hauteur de l'équipement (12), le dispositif (10) comprenant :
- un carter (20) comportant au moins une face latérale (26) et une face inférieure (24), le carter (20) étant propre à être fixé à l'équipement (12), la face inférieure (24) définissant une surface interne (25A) et une surface externe (25B), la face latérale (26) comprenant au moins un trou oblong (27) ;
- une équerre (30) comportant une surface latérale (32) parallèle à la face latérale (26) du carter (20) et une surface inférieure (34) sensiblement parallèle à la face inférieure (24), en regard de la surface interne (25A) ;
- au moins un élément de fixation (40) passant par la surface latérale (32) de l'équerre (30) et par la face latérale (26) du carter (20) à travers le trou oblong (27), l'élément de fixation (40) étant propre à maintenir la surface latérale (32) de l'équerre (30) contre la face latérale (26) du carter (20), l'élément de fixation (40) étant apte à fixer le dispositif (10) au véhicule ferroviaire ;
où le dispositif (10) comprend en outre :
- au moins une tige de réglage (42) passant par la surface inférieure (34) de l'équerre (30) et par la face inférieure (24) du carter, la tige de réglage (42) étant engagée dans un élément de serrage (44) s'étendant contre la surface externe (25B) de la face inférieure (24) de sorte qu'un déplacement de l'élément de serrage (44) le long de la tige de réglage (42) entraîne un déplacement de la surface inférieure (34) de l'équerre (30) par rapport à la surface interne (25A) de la face inférieure (24) du carter (20).

2. Dispositif (10) selon la revendication 1, dans lequel le carter (20) est fixé à l'équipement (12) par la face inférieure (24).

3. Dispositif (10) selon l'une quelconque des revendications précédentes, dans lequel la face inférieure (24) et la face latérale (26) sont perpendiculaires entre elles.

4. Dispositif (10) selon l'une quelconque des revendications précédentes, dans lequel la tige de réglage (42) est engagée dans un élément de fixation complémentaire (46) positionné contre l'élément de serrage (44).

5. Dispositif (10) selon l'une quelconque des revendications précédentes, comprenant deux éléments de fixation (40) et une unique tige de réglage (42).

6. Dispositif (10) selon l'une quelconque des revendications précédentes, dans lequel le ou chaque trou oblong (27) de la face latérale (26) du carter (20) s'étend selon un axe parallèle à la tige de réglage (42), de sorte que le déplacement de l'élément de serrage (44) entraîne un déplacement de la face latérale (26) du carter (20) par rapport à l'élément de fixation (40).

7. Dispositif (10) selon l'une quelconque des revendications précédentes, dans lequel l'équerre (30) est une tôle pliée présentant des orifices de passage recevant le ou les éléments de fixation (40) et la ou les tiges de réglage (42).

8. Dispositif (10) selon l'une quelconque des revendications précédentes, dans lequel le ou chaque élément de fixation (40) et la ou chaque tige de réglage (42) sont des vis.

9. Ensemble comprenant un véhicule ferroviaire, un équipement (12) et au moins un dispositif (10) selon l'une quelconque des revendications 1 à 8, l'équipement (12) étant fixé au véhicule ferroviaire par l'intermédiaire du ou des dispositifs (10).

10. Procédé de réglage de la hauteur d'un équipement (12) fixé à un véhicule ferroviaire par au moins un dispositif (10) selon l'une quelconque des revendications 1 à 8, comprenant des étapes de :
- desserrage du ou des éléments de fixation (40) du ou de chaque dispositif (10) ;
- maintien de l'équipement (12) en position verticale par le ou chaque dispositif (10) ;
- réglage de la hauteur de l'équipement (12) au moyen du ou de chaque élément de serrage (44) du ou de chaque dispositif (10) ; et
- resserrage du ou des éléments de fixation (40) de chaque dispositif (10).

## Patentansprüche

1. Vorrichtung (10) zur Befestigung einer Ausrüstung (12) an einem Schienenfahrzeug, welche angepasst ist, um eine Höheneinstellung der Ausrüstung (12) zu erlauben, wobei die Vorrichtung (10) aufweist:
- ein Gehäuse (20), welches zumindest eine Seitenfläche (26) und eine untere Fläche (24) aufweist, wobei das Gehäuse (20) imstande ist, an der Ausrüstung (12) befestigt zu sein, wobei die untere Fläche (24) eine Innenfläche (25A) und eine Außenfläche (25B) definiert, wobei die Seitenfläche (26) zumindest ein Langloch (27) aufweist,
- einen Winkel (30), welcher aufweist eine Seitenfläche (32), welche parallel zur Seitenfläche (26) des Gehäuses (20) ist, und eine untere Fläche (34), welche im Wesentlichen parallel zur unteren Fläche (24) ist, gegenüber von der Innenfläche (25A),
- zumindest ein Element zur Befestigung (40), welches die Seitenfläche (32) des Winkels (30) und die Seitenfläche (26) des Gehäuses (20) durch das Langloch (27) durchläuft, wobei das Element zur Befestigung (40) imstande ist, die Seitenfläche (32) des Winkels (30) gegen die Seitenfläche (26) des Gehäuses (20) zu halten, wobei das Element zur Befestigung (40) geeignet ist, um die Vorrichtung (10) am Schienenfahrzeug zu befestigen,
wobei die Vorrichtung (10) ferner aufweist:
- zumindest eine Stange zum Einstellen (42), welche die untere Fläche (34) des Winkels (30) und die untere Fläche (24) des Gehäuses durchläuft, wobei die Stange zum Einstellen (42) im Eingriff in einem Element zum Klemmen (44) ist, welches sich gegen die Außenfläche (25B) der unteren Fläche (24) erstreckt, sodass eine Bewegung des Elements zum Klemmen (44) entlang der Stange zum Einstellen (42) eine Bewegung der unteren Fläche (34) des Winkels (30) bezüglich der Innenfläche (25A) der unteren Fläche (24) des Gehäuses (20) verursacht.

2. Vorrichtung (10) gemäß Anspruch 1, wobei das Gehäuse (20) an der Ausrüstung (12) mittels der unteren Fläche (24) befestigt ist.

3. Vorrichtung (10) gemäß irgendeinem der vorherigen Ansprüche, wobei die untere Fläche (24) und die Seitenfläche (26) senkrecht zueinander sind.

4. Vorrichtung (10) gemäß irgendeinem der vorherigen Ansprüche, wobei die Stange zum Einstellen (42) im Eingriff in einem komplementären Element zur Befestigung (46) ist, welches gegen das Element zum Klemmen (44) angeordnet ist.

5. Vorrichtung (10) gemäß irgendeinem der vorherigen Ansprüche, welche zwei Elemente zur Befestigung (40) und eine einzige Stange zum Einstellen (42) aufweist.

6. Vorrichtung (10) gemäß irgendeinem der vorherigen Ansprüche, wobei das oder jedes Langloch (27) der Seitenfläche (26) des Gehäuses (20) sich entlang einer Achse erstreckt, welche parallel zur Stange zum Einstellen (42) ist, sodass die Bewegung des Elements zum Klemmen (44) eine Bewegung der Seitenfläche (26) des Gehäuses (20) bezüglich des Elements zur Befestigung (40) verursacht.

7. Vorrichtung (10) gemäß irgendeinem der vorherigen Ansprüche, wobei der Winkel (30) ein abgewinkeltes Blech ist, welches Durchgangsöffnungen hat, welche das oder die Elemente zur Befestigung (40) und die Stange oder die Stangen zum Einstellen (42) aufnehmen.

8. Vorrichtung (10) gemäß irgendeinem der vorherigen Ansprüche, wobei das oder jedes Element zur Befestigung (40) und die oder jede Stange zum Einstellen (42) Schrauben sind.

9. Anordnung, welche aufweist ein Schienenfahrzug, eine Ausrüstung (12) und zumindest eine Vorrichtung (10) gemäß irgendeinem der Ansprüche 1 bis 8, wobei die Ausrüstung (12) am Schienenfahrzeug mittels der oder den Vorrichtungen (10) befestigt ist.

10. Verfahren zum Einstellen der Höhe einer Ausrüstung (12), welche an einem Schienenfahrzeug mittels einer Vorrichtung (10) gemäß irgendeinem der Ansprüche 1 bis 8 befestigt ist, welches aufweist die Schritte:
- Lösen des oder der Elemente zur Befestigung (40) der oder jeder Vorrichtung (10),
- Halten der Ausrüstung (12) in vertikaler Position mittels der oder jeder Vorrichtung (10),
- Einstellen der Höhe der Ausrüstung (12) mittels des oder jedes Elements zum Klemmen (44) der oder jeder Vorrichtung (10) und
- Wieder-Anziehen des oder der Elemente zur Befestigung (40) jeder Vorrichtung (10).

## Claims

1. Device (10) for fixing an item of equipment (12) to a railway vehicle, adapted in order to allow adjustment in height of the equipment (12), the device (10) comprising:
- a housing (20) comprising at least one lateral face (26) and a lower face (24), the housing (20) being able to be fixed to the equipment (12), the lower face (24) defining an internal surface (25A) and an external surface (25B), the lateral face (26) comprising at least one oblong hole (27);
- an angle bracket (30) comprising a lateral surface (32) parallel to the lateral face (26) of the housing (20) and a lower surface (34) substantially parallel to the lower face (24) opposite the internal surface (25A);
- at least one fixing element (40) passing through the lateral surface (32) of the angle bracket (30) and through the lateral face (26) of the housing (20) via the oblong hole (27), the fixing element (40) being able to retain the lateral surface (32) of the angle bracket (30) against the lateral face (26) of the housing (20), the fixing element (40) being suitable for fixing the device (10) to the railway vehicle;
in which the device (10) furthermore comprises:
- at least one adjustment rod (42) passing through the lower surface (34) of the angle bracket (30) and through the lower face (24) of the housing, the adjustment rod (42) being engaged in a locking element (44) extending against the external surface (25B) of the lower face (24) so that a displacement of the locking element (44) along the adjustment rod (42) causes a displacement of the lower surface (34) of the angle bracket (30) relative to the internal surface (25A) of the lower face (24) of the housing (20).

2. Device (10) according claim 1, in which the housing (20) is fixed to the equipment (12) by the lower face (24).

3. Device (10) according to any of the preceding claims, in which the lower face (24) and the lateral face (26) are perpendicular to each other.

4. Device (10) according to any of the preceding claims, in which the adjustment rod (42) is engaged in a complementary fixing element (46) positioned against the locking element (44).

5. Device (10) according to any of the preceding claims, comprising two fixing elements (40) and a single adjustment rod (42).

6. Device (10) according to any of the preceding claims, in which the or each oblong hole (27) of the lateral face (26) of the housing (20) extends according to an axis parallel to the adjustment rod (42) so that the displacement of the locking element (44) causes a displacement of the lateral face (26) of the housing (20) relative to the fixing element (40).

7. Device (10) according to any of the preceding claims, in which the angle bracket (30) is a folded sheet having through-holes receiving the fixing element or elements (40) and the adjustment rod or rods (42).

8. Device (10) according to any of the preceding claims, in which the or each fixing element (40) and the or each adjustment rod (42) are bolts.

9. Assembly comprising a railway vehicle, an item of equipment (12) and at least one device (10) according to any of claims 1 to 8, the equipment (12) being fixed to the railway vehicle by means of the device or devices (10).

10. Method for adjustment in height of an item of equipment (12) fixed to a railway vehicle by at least one device (10) according to any of claims 1 to 8, comprising the steps of:
- slackening the fixing element or elements (40) of the or each device (10);
- retaining the equipment (12) in a vertical position by the or each device (10);
- adjustment in height of the equipment (12) by means of the or each locking element (44) of the or each device (10); and
- tightening the fixing element or elements (40) of each device (10).
